(19) Europäisches Patentamt

European Patent Office

Office européen des brevets

(11) **EP 0 627 264 B1**

(12) **EUROPÄISCHE PATENTSCHRIFT**

(45) Veröffentlichungstag und Bekanntmachung des Hinweises auf die Patenterteilung:
**15.09.1999 Patentblatt 1999/37**

(51) Int. Cl.$^6$: **B03D 1/14**, B01F 5/06

(21) Anmeldenummer: **94106310.9**

(22) Anmeldetag: **22.04.1994**

(54) **Injektor für Flotationseinrichtungen**

Injector for flotation devices

Injecteur pour dispositifs de flottation

(84) Benannte Vertragsstaaten:
**AT SE**

(30) Priorität: **03.05.1993 DE 4314507**

(43) Veröffentlichungstag der Anmeldung:
**07.12.1994 Patentblatt 1994/49**

(73) Patentinhaber: **J.M. Voith GmbH**
**D-89522 Heidenheim (DE)**

(72) Erfinder:
• **Meinecke, Albrecht, Dr.**
**D-89520 Heidenheim (DE)**
• **Trefz, Michael, Dr.**
**D-89522 Heidenheim (DE)**
• **Heinzmann, Helmut**
**D-89558 Böhmenkirch (DE)**

(74) Vertreter: **Dr. Weitzel & Partner**
**Friedenstrasse 10**
**89522 Heidenheim (DE)**

(56) Entgegenhaltungen:
EP-A- 0 256 965          CH-A- 547 120
DE-B- 2 205 371          FR-A- 2 269 998
GB-A- 729 226            GB-A- 2 073 604
US-A- 4 417 985

# Beschreibung

Die Erfindung betrifft einen Injektor oder Mischer zur Vermischung von Fasersuspensionen mit Luft in Flotationsanlagen oder ähnlichem. Ein Injektor mit veränderlichem Querschnitt für Flotationseinrichtungen ist bekannt aus der DE-C-34 01 161. Hierbei wird durch die Stufensprünge eine erhebliche Turbulenz erzeugt, die bewirkt, daß relativ feine Luftblasen mit der Suspension vermischt werden. Die Luft wird dabei seitlich vor den Stufensprüngen eingeleitet.

Andererseits sind auch Mischeinrichtungen insbesondere für verschiendene Flüssigkeitskomponenten bekannt, bei denen Platten mit unregelmäßigen, im wesentlichen stegförmigen Oberflächen, welche eine bestimmte Winkelneigung im Verhältnis zur Durchströmungsrichtung haben, so zueinander zugeordnet sind, daß die Stege sich kreuzen. Hierbei ist insbesondere vorgesehen, daß sich die Kuppen der Stege benachbarter Platten berühren (DE-A-2205371). Hierbei sind eine Vielzahl von zueinander parallelen Platten in einem Gehäuse vorgesehen, das im allgemeinen einen runden Querschnitt - genommen senkrecht zur Strömungsrichtung - hat. Zur Verbesserung der Mischwirkung ist vorzugsweise auch vorgesehen, daß die Platten paketweise in dem Gehäuse angeordnet sind, wobei die aneinander stoßenden Platten der benachbarten Pakete jeweils entgegengesetzte Winkelneigungen in Bezug auf die Längsachse (Durchströmungsrichtung) des Mischergehäuses haben.

Es gibt ferner Flotationseinrichtungen (z.B. die DE-C-3614933) insbesondere für Flotationsanlagen zur Aufbereitung von Altpapiersuspensionen, bei welchen sehr wenige Injektoren die Belüftung der Suspension bewirken. Vorzugsweise sind diese Injektoren mit einer vertikalen Achse angeordnet, so daß sie von oben in die Suspension eintauchen. Es gibt aber auch Einrichtungen, bei welchen eine horizontale Ausrichtung der Injektoren - also die eine horizontale Zuströmung der Suspension bewirken - vorhanden ist.

DE-A-37 41 843 zeigt ebenfalls eine Vorrichtung zum Vermischen von Flüssigkeiten mit Gasen. Diese Schrift offenbart einen Injektor oder Mischer zum Eintrag eines Gemisches aus Luft und Fasersuspension in eine Flotationseinrichtung, wobei ein oder mehrere zueinander parallele Strömungskanäle vorgesehen sind, die ein Eintrittsende und ein Austrittsende und einen durch wiederholte Verengungen und Erweiterungen in Strömungsrichtung veränderlichen Querschnitt aufweisen, und wobei in Bezug auf die Strömungsrichtung durch den Strömungskanal stromaufwärts Mittel zum Zuführen von Suspensionen und Mittel zum Zuführen von Luft in den Strömungskanal vorgesehen sind, wobei jeder Strömungskanal zwei einander konzentrisch zugeordnete Zylinder aufweist, deren einander zugewandlen Wände abwechselnd mit länglichen, sich quer zur Strömungsrichtung über die Wände erstrekkenden Erhebungen und Vertiefungen versehen sind, und die Erhebungslängsachsen und entsprechend die Vertiefungslängsachsen mit der Längsachse des Strömungskanals Winkel von 90° bilden.

Die Aufgabe der Erfindung ist es, für sehr große Flotationsanlagen mit sehr großen Durchsatzleistungen einen geeigneten Injektor anzugeben, der eine einwandfreie Belüftung der Fasersuspension mit vielen kleinen Luftblasen bewirkt.

Diese Aufgabe wird erfindungsgemäß dadurch gelöst, daß der Querschnitt der Erhebungen der Platten oder Zylinder zu dem entsprechenden Querschnitt der Zwischenräume zwischen den Erhebungen sich mindestens wie 0,5:1 verhält.

Durch die Erhebungen der einander gegenüberliegenden Wände des Injektors wird durch die starke Verwirbelung der Strömung eine gute Durchmischung mit Luftblasen erreicht. Es ist günstig, die Erhebungen als Stege vorzusehen, deren Verlauf in Bezug auf die beiden gegenüberliegenden, die Stege tragenden Platten gekreuzt ist. Dies ähnelt dem beschriebenen Stand der Technik. Erfindungsgemäß werden jedoch nur wenige oder nur zwei einander gegenüberliegende Platten bzw. zwei einander konzentrische zugeordnete Bauteile in Form eines Rohres bzw. eines Zylinders mit dem Erhebungen versehen. Dabei besteht ein erheblicher Abstand zwischen den Kuppen der beiden Platten bzw. Körper. Im Fall von Rohr und Zylinder ist es günstig, die Erhebungen gewindeähnlich fortlaufend auszubilden.

Nachfolgend wird die Erfindung anhand der Figuren der Zeichnung erläutert; dabei stellen im einzelnen dar

Figur 1 bis Figur 3 Axialschnitte von verschiedenen Ausführungsformen des erfindungsgemäßen Injektors,

Figuren 1a und 2a jeweils Draufsichten zu den entsprechenden Axialschnitten,

Figur 4a bis Figur 4e schematisch, ohne daß die Größenverhältnisse richtig wiedergegen sind, weitere Injektorplatten bzw. Formen der Erhebungen der Platten und

Figur 5 ein Injektor mit zylindrischer Grundform.

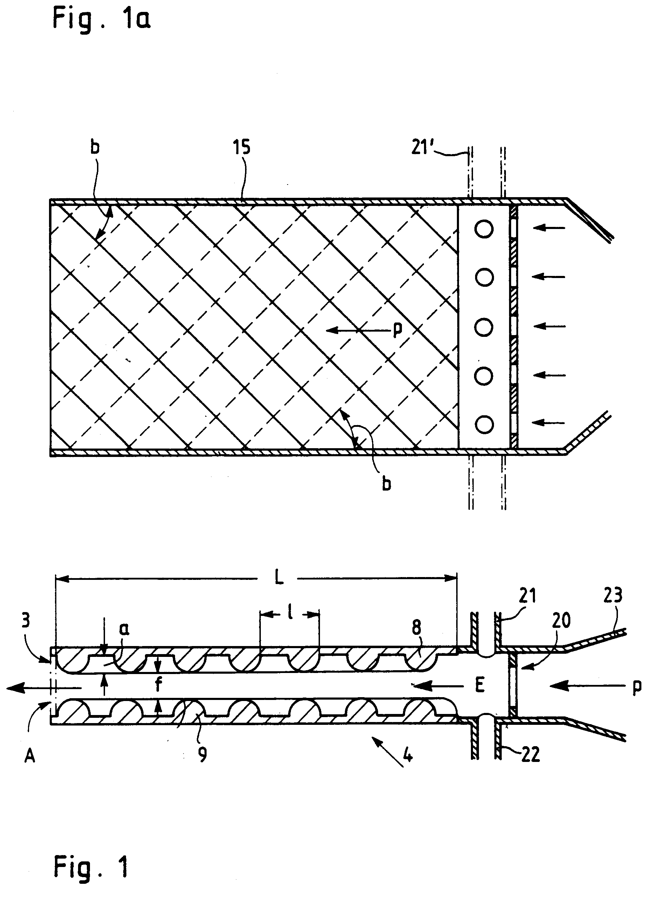

Der Injektor der Figuren 1 und 1a hat zwei einander gegenüberliegende, den Strömungskanal mit Eintrittsende E und Austrittsende A begrenzende Injektorplatten 3 und 4 mit den Erhebungen 8 bzw. 9. Die Erhebungen sind praktisch als Stege ausgeführt und verlaufen unter einem Winkel b, der von einer Seitenwand 15 - also parallel zur Strömungsrichtung durch den Injektor - aus gegen die Strömungsrichtung p gezogen ist zwischen 10 und 90°, vorzugsweise zwischen 20 und 80°. Dieser Winkel kann jedoch vom Eintrittsende E zum Austrittsende A mehr und mehr zunehmen, vorzugsweise zwischen 30 und 90°.

In diesem Fall hat der Injektor Zufuhrkanäle 21 und 22 für die Luft, die hinter einer Blende 20 des Zufuhrkanals 23 an diesen angeschlossen sind. Es können stattdessen auch ein oder zwei seitliche - strichpunktiert angedeutete - Zufuhrkanäle 21' für Preßluft vorgesehen sein.

Der Abstand f zwischen den die Kuppen der Erhebungen berührenden Ebenen hat ein bestimmtes Verhältnis zur Höhe a der Erhebungen im folgenden Bereich

$$0,1 \leq f/a \leq 10, \text{ vorzugsweise } 1 \leq f/a \leq 10.$$

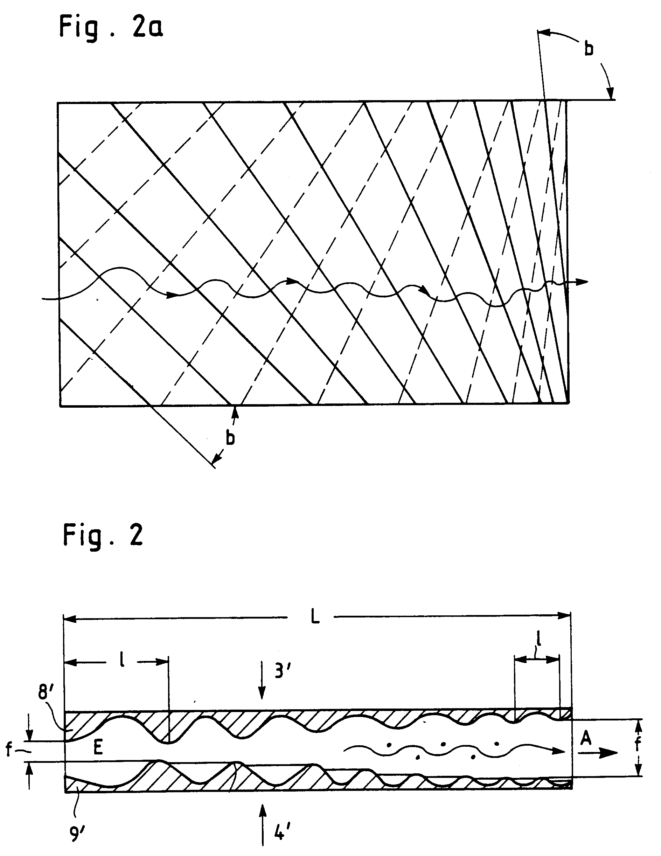

In den Figuren 2 und 2a sind zwei Injektorplatten 3' und 4' dargestellt, bei denen die Erhebungen 8',9' vom Eintrittsende E zum Austrittsende A hin immer kleiner werden, während der Abstand f der die benachbarten Erhebungen berührenden Ebene zum Austrittsende A hin entsprechend größer wird. Entsprechend nimmt hier auch die Wellenlänge I der Erhebungen vom Eintrittsende E zum Austrittsende A hin ab. Hingegen ist im Fall von Figur 1 der gegenseitige Abstand der Erhebungen I konstant. Der Wert des Verhältnisses der Gesamtlänge L des Injektors zum gegenseitigen Abstand I der Kuppen der Erhebungen kann vorzugsweise in dem folgenden Bereich liegen

$$5 \leq L/I \leq 100.$$

Das Verhältnis des gegenseitigen Abstandes I der Kuppen 16 der Erhebungen zur Höhe a der Erhebungen kann in dem folgenden Bereich liegen

$$1 \leq I/a \leq 10.$$

Im Fall von einem Wellenzug, den die Erhebungen 8' und 9' bilden, ist natürlich die Länge I die Wellenlänge $\lambda$. Praktisch liegt der Wert für die Höhe bzw. maximale Höhe der Erhebungen 3,4 bzw. 3', 4' zwischen 4 und 20mm.

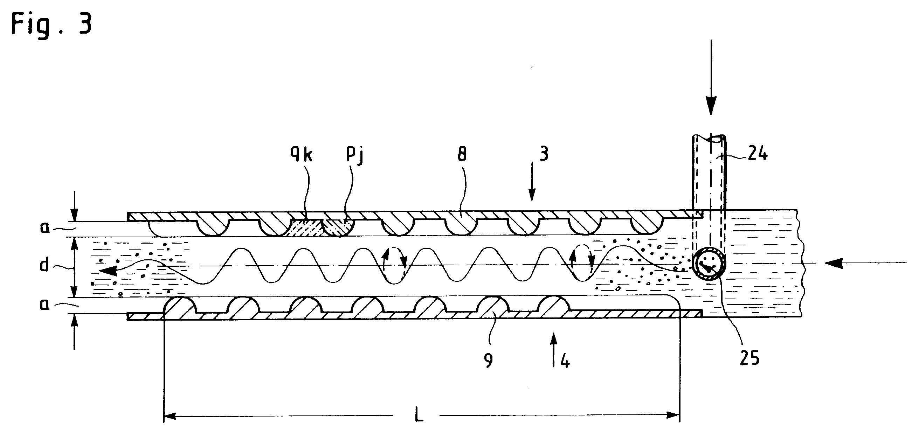

In Figur 3 ist eine ähnliche Ausführungsform wie in Figur 1 gezeigt, wobei hier nur die Luftzufuhr auf andere Weise erfolgt. Das Zufuhrrohr mit den Austrittsöffnungen 25 für die Luft ist mit 24 angegeben.

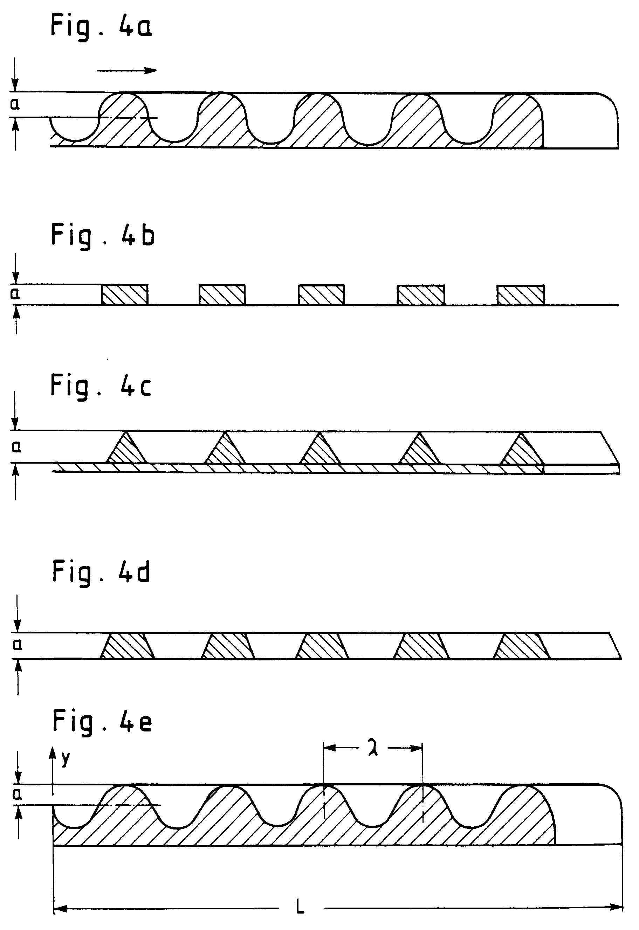

Im Bild 4a bis 4e sind weitere Ausführungsformen von möglichen Erhebungen dargestellt, und zwar in Figur 4a als ein Kreisprofil, in Figur 4b als Rechteckprofil, in Figur 4c als Dreieckprofil und in Figur 4d als Trapezprofil. Das Profil der Figur 4e ist ein sinusförmiges Profil, wobei die Wellenlänge $\lambda$ konstant ist. Diese Profilform kann mit der Formel $y = a \cdot \sin(2\pi/\lambda \cdot x)$ beschrieben werden.

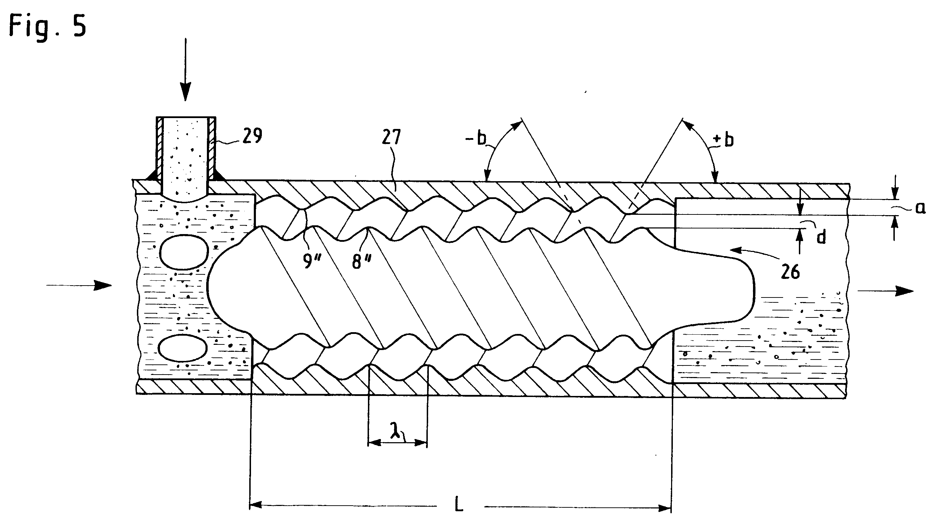

Nach Figur 5 besteht der Injektor aus einem inneren Teil 26 von zylindrischer Grundform und einem äußeren Teil 27; im wesentlichen als Hohlzylinder ausgebildet; jeweils mit den Erhebungen 8" bzw. 9", sowie Luftzufuhrröhren 29.

Bei den erfindungsgemäßen Injektoren beträgt der Luftblasendurchmesser im Mittel etwa 1mm. Man erreicht mit dem erfindungsgemäßen Injektor deutlich feinere Luftblasen in großer Menge, so daß die Druckfarbenentfernung schneller beendet ist als mit bisher bekannten großen Injektoren, die an sehr große Flotationsanlagen dimensionsmäßig angepaßt sind. Man hat bei den erfindungsgemäßen Injektoren eine hohe turbulente Schwankungsgeschwindigkeit bei relativ kurzem Mischungsweg. Die Strömungsgeschwindigkeiten in dem Injektor sind wie üblich zwischen 5 und 15m/s anzusiedeln.

Grundsätzlich ist zu sagen, daß die Zahl der Platten und damit der durch diese gebildeten Kanäle im Sinne einer kostengünstigen Fertigung relativ klein sein sollte, so daß im allgemeinen höchstens vier Platten mit dazwischen gebildeten, zueinander parallelen Kanälen von drei an der Zahl ausreichend sein müßte. Bevorzugt ist in dieser Hinsicht natürlich die Anordnung mit nur zwei Platten und einem zwischen diesen gebildeten Kanal.

Es ist ja schon erläutert worden, daß bestimmte Formen der Erhebungen angewendet werden sollten. Weiter ist wichtig der Querschnitt der Erhebungen in Bezug auf die Längsachse der Kanäle oder Platten, also die Richtung zwischen Eintritt und Austritt der Kanäle. Bezeichnet man die Größe des Querschnitts der Erhebungen mit $p_j$ und die Größe des Querschnitts der Zwischenräume zwischen benachbarten Erhebungen - in derselben Richtung genommen - mit $q_k$, (siehe Fig. 3), so ist das Verhältnis zwischen beiden $p_j/q_k$ als mindestens 0,5 zu wählen. Über die gesamte Platte gesehen ist dieser Grenzwert auch für das Verhältnis der Summe des Querschnitts aller Erhebungen zur Summe des Querschnittes aller Zwischenräume zu nehmen. Ferner ist es günstig, wenn die Summe aller dieser Querschnitte je Platte und Kanal (d.h. je Plattenseite) größer als 4000mm$^2$/m ist. Der minimale Abstand zwischen zwei benachbarten Erhebungen benachbarter Platten beträgt 5mm, vorzugsweise 8mm.

Es hat sich herausgestellt, daß die Strömungsgeschwindigkeit - bezogen auf den lichten Querschnitt des jeweiligen Kanals (Breite desselben zu Abstand d der Erhebungen) - größer sein muß als 3m/s. Vorzugsweise liegt sie im Bereich zwischen 6 und 10m/s. Der erwähnte Plattenabstand dient auch dazu, den Druckverlust relativ klein zu halten, der möglichst nicht 1 bar übersteigen sollte.

Der Plattenabstand beeinflußt in starkem Maß das Größenspektrum der entstehenden Luftblasen. Je nach Faserstoffart und Größe der Druckfarbenpartikel sind unterschiedliche Abstände notwendig, um eine optimale Druckfarbenentfernung zu erhalten. Bei einem breiten Größenspektrum der Druckfarbenpartikel ist es vorteilhaft, in mehreren aufeinander folgenden Mischkanälen mit jeweils unterschiedlichem Abstand d(=f) auch entsprechende Luftblasenspektren zu erzeugen. Dabei ist es günstig, zunächst große Luftblasen und dann mehr kleinere Luftblasen zu erzeugen. Das bedeutet andererseits, daß der Abstand d(=f) zwischen den Erhebungen der Platten von Plattenpaar oder Plattengruppe zu anschließender Plattengruppe immer kleiner wird. Günstige Werte liegen für d zwischen 10 und 50mm und für a zwischen 4 und 20mm.

**Patentansprüche**

1. Injektor oder Mischer zum Eintrag eines Gemisches aus Luft und Fasersuspension in eine Flotationseinrichtung, wobei ein oder mehrere zueinander parallele Strömungskanäle vorgesehen sind, die ein Eintrittsende (E) und ein Austrittsende (A) und einen durch wiederholte Verengungen und Erweiterungen in Strömungsrichtung veränderlichen Querschnitt aufweisen, und wobei in Bezug auf die Strömungsrichtung durch den Strömungskanal stromaufwärts Mittel zum Zuführen von Suspensionen (23) und Mittel zum Zuführen von Luft (21, 22) in den Strömungskanal vorgesehen sind, wobei jeder Strömungskanal zwei einander gegenüberliegende Platten (3, 4; 3', 4') oder einander konzentrisch zugeordnete Zylinder (26, 27) aufweist, deren einander zugewandten Wände abwechselnd mit länglichen, sich quer zur Strömungsrichtung über die Wände erstreckenden Erhebungen (8, 9; 8', 9') und Vertiefungen versehen sind, und die Erhebungslängsachsen und entsprechend die Vertiefungslängsachsen mit der Längsachse des Strömungskanals Winkel (b) zwischen 10 und 90° bilden, und wobei der Querschnitt ($p_j$) der Erhebungen (8, 9; 8', 9') der Platten (3, 4; 3', 4') oder Zylinder (26, 27) zu dem entsprechenden Querschnitt ($q_k$) der Zwischenräume zwischen den Erhebungen - in Strömungsrichtung genommen - sich mindestens wie 0,5 : 1 verhält.

2. Injektor nach Anspruch 1, dadurch gekennzeichnet, daß das Verhältnis des Abstandes f zwischen den die Kuppen der Erhebungen berührenden Ebenen zur Höhe a der Erhebungen in folgendem Bereich liegt:

$$0,1 \leq f/a \leq 10$$

3. Injektor nach Anspruch 1 oder 2, dadurch gekennzeichnet, daß benachbarte Erhebungen (8, 9; 8', 9') bzw. Vertiefungen der Platten (3, 4; 3', 4') oder Zylinder (26, 27) parallel zueinander oder mit einer Abweichung des Winkels (b) von höchstens 8° von Erhebung zu Erhebung zueinander verlaufen.

4. Injektor nach einem der Ansprüche 1 bis 3, dadurch gekennzeichnet, daß die Erhebungen der Platten oder Zylinder zueinander kreuzend verlaufen.

5. Injektor nach einem der Ansprüche 1 bis 4, dadurch gekennzeichnet, daß der Winkel (b), den die Erhebungen mit der generellen Strömungsrichtung der Suspension im jeweiligen Kanal bilden, von Erhebung zu Erhebung oder bezogen auf Gruppen aufeinanderfolgender Erhebungen stetig in der genannten Strömungsrichtung in einem Bereich zwischen 20 und 90° ansteigt.

6. Einrichtung nach einem der Ansprüche 1 bis 5, dadurch gekennzeichnet, daß der Abstand der beiden, die benachbarten Erhebungen (8, 9; 8', 9') gegenüberliegender Platten (3, 4; 3', 4') berührenden Ebenen mehr als 5 mm, vorzugsweise 8 mm, beträgt.

7. Einrichtung nach einem der Ansprüche 1 bis 6, dadurch gekennzeichnet, daß der Abstand der beiden, die benachbarten Erhebungen (8, 9; 8', 9') gegenüberliegender Platten (3, 4; 3', 4') berührenden Ebenen f variabel ist, und vom Eintrittsende (E) zum Austrittsende (A) hin größer wird.

**Claims**

1. Injector or mixer for feeding a mixture of air and fibre suspension into a flotation tank, whereby one or more parallel flow channels are provided, which have an input end (E) and output end (A) and a cross section that changes in flow direction with repeated constrictions and widenings, and in which with respect to the flow direction through the flow channel upstream means for feeding suspensions (23) and means for feeding air (21, 22) into the flow channel are provided, whereby each flow channel has two opposite plates (3, 4, 3', 4') or concentrically arranged cylinders (26, 27) the facing walls of which are provided alternatively with longitudinal elevations (8, 9; 8', 9') and depressions extending perpendicular to the flow direction along the walls, and the elevation longitudinal axes and correspondingly the depression longitudinal axes with the longitudinal axis of the flow channel form angles (b) of between 10° and 90°, and whereby the cross section ($p_j$) of the elevations (8, 9; 8', 9') of the plates (3, 4; 3', 4') or cylinders (26, 27) is in a ration to the corresponding cross section ($q_k$) of the intermediate spaces between the elevations - taken in flow direction -of at least 0.5 : 1.

2. Injector according to claim 1, characterised in that the ratio of the distance f between the planes contacting the apexes of the elevations to the height a of the elevations is in the following range: $0.1 \leq f/a \leq 10$.

3. Injector according to claim 1 or 2, characterised in that adjacent elevations (8, 9; 8', 9') or depressions of the plates (3, 4; 3', 4') or cylinders (26, 27) run parallel to one another or with a deviation in angle (b) of at most 8° from elevation to elevation.

4. Injector according to one of claims 1 to 3, characterised in that the elevations of the plates or cylinders cross one another.

5. Injector according to one of claims 1 to 4, characterised in that the angle (b) which the elevations form with the general flow direction of the suspension in the respective channel increases continually from elevation to elevation or relative to groups of consecutive elevations in the said flow direction in a range of between 20° and 90°.

6. Device according to one of claims 1 to 5, characterised in that the distance between the two planes contacting the adjacent elevations (8, 9'; 8', 9') of opposite plates (3, 4; 3', 4') is more than 5 mm, preferably 8 mm.

7. Device according to one of claims 1 to 6, characterised in that the distance between the two planes f contacting the adjacent elevations (8, 9; 8', 9') of opposite plates (3, 4; 3', 4') is variable and greater from the input end (E) to the output end (A).

**Revendications**

1. Injecteur ou mélangeur pour l'alimentation d'un mélange composé d'air et de suspension fibreuse dans un dispositif de flottation, étant entendu qu'un ou plusieurs canaux d'écoulement parallèles entre eux sont prévus, lesquels présentent une extrémité d'entrée (E) et une extrémité de sortie (A) et une section variable dans le sens de l'écoulement grâce à des rétrécissement et des élargissements répétés, et étant entendu que, en amont, par rapport à la direction de l'écoulement dans le canal d'écoulement, des moyens pour alimenter des suspensions (23) et des moyens pour alimenter de l'air (21, 22) dans le canal d'écoulement sont prévus, chaque canal d'écoulement présentant deux plaques en regard (3, 4, 3', 4') ou des cylindres placés concentriques l'un par rapport à l'autre (26, 27) dont les parois en regard sont pourvues en alternance de bosses longitudinales (8, 9, 8', 9') et de creux longitudinaux s'étendant sur les parois transversalement par rapport à la direction de l'écoulement, l'axe longitudinal des bosses et par conséquent l'axe longitudinal des creux formant un angle (b) compris entre 10 et 90° avec l'axe longitudinal du canal d'écoulement, et étant entendu que la section (pj) des bosses (8, 9, 8', 9') des plaques (3, 4, 3', 4') ou des cylindres (26, 27) se comporte par rapport à la section correspondante ($q_k$) des espaces intermédiaires entre les bosses, pris dans la direction de l'écoulement, au moins comme dans le rapport 0,5:1.

2. Injecteur selon la revendication 1, caractérisé en ce que le rapport de la distance f entre les plans touchant les sommets des bosses et la hauteur a des bosses est compris dans la plage définie comme suit:

$$0{,}1 \leq f/a \leq 10$$

3. Injecteur selon la revendication 1 ou 2, caractérisé en ce que des bosses voisines (8, 9, 8', 9') ou des creux voisins des plaques (3, 4, 3', 4') ou des cylindres (26, 27) sont parallèles entre eux ou convergent en présentant un écart de l'angle (b) de 8° au plus d'une bosse à l'autre.

4. Injecteur selon l'une des revendications 1 à 3, caractérisé en ce que les bosses des plaques ou des cylindres sont disposées en se croisant les unes les autres.

5. Injecteur selon l'une des revendications 1 à 4, caractérisé en ce que l'angle (b), formé par les bosses et la direction générale d'écoulement de la suspension dans le canal afférent, augmente constamment d'une bosse à l'autre ou, rapporté à des groupes de bosses consécutives, dans la direction mentionnée de l'écoulement, dans une plage comprise entre 20 et 90°.

6. Injecteur selon l'une des revendications 1 à 5, caractérisé en ce que la distance des deux plans touchant les bosses voisines (8, 9, 8', 9') des plaques en regard (3, 4, 3', 4') est de plus de 5 mm, de préférence de 8 mm.

7. Injecteur selon l'une des revendications 1 à 6, caractérisé en ce que la distance des deux plans touchant les bosses voisines (8, 9, 8', 9') des plaques en regard (3, 4, 3', 4') f est variable et va s'agrandissant de l'extrémité d'entrée (E) à l'extrémité de sortie (A).

Fig. 1a

b 15 21'

p

b

Fig. 1

L

l

3 a 8 21 23

20

f E p

A 9 4 22

Fig . 2a

Fig . 2

# Fig. 3

EP 0 627 264 B1

Fig. 4a

Fig. 4b

Fig. 4c

Fig. 4d

Fig. 4e

9

Fig. 5

EP 0 627 264 B1